# EUROPEAN PATENT SPECIFICATION

(11) **EP 4 197 331 B1**
(45) Date of publication and mention of the grant of the patent: **14.10.2026**
(21) Application number: 21855676.9
(22) Date of filing: 01.03.2021
(51) Int. Cl.: A01N 33/02, A01N 25/02, A01N 25/04, A01N 25/30, A01K 31/14, A01N 59/16

(54) **NANOSTRUCTURED HYBRID MATERIAL BASED ON NIOBIUM OLIGOMERS, OBTENTION METHOD, AND USE**
NANOSTRUKTURIERTES HYBRIDMATERIAL AUF BASIS VON NIOBOLIGOMEREN, HERSTELLUNGSVERFAHREN UND VERWENDUNG
MATÉRIAU HYBRIDE NANOSTRUCTURÉ À BASE D'OLIGOMÈRES DE NIOBIUM, PROCÉDÉ D'OBTENTION ET UTILISATION

(30) Priority: 11.08.2020 BR 102020016362
(43) Date of publication of application: 21.06.2023
(73) Proprietor: Universidade Federal De Minas Gerais - UFMG, 31270-901 Belo Horizonte (BR); Ondonto Tech Pesquisa e Inovação, Ltda, 30140-120 Belo Horizonte, MG (BR)
(72) Inventor: ALVES DE OLIVEIRA, Luiz Carlos, 31270-150 Belo Horizonte (BR); DE CASTRO OLIVEIRA, Cinthia, 31270-901 Belo Horizonte (BR); CHAGAS, Poliane, 31270-901 Belo Horizonte (BR); CAMPOS DE MELO, Ariane Carla, 31270-901 Belo Horizonte (BR)
(74) Representative: Clarke, Modet y Cía., S.L.
(86) International application number: PCT/IB2021/051685
(87) International publication number: WO 2022/034381

(56) References cited:
- EP-A1- 1 685 854
- WO-A1-2012/164256
- WO-A1-2014/006383
- WO-A1-2020/152245
- BR-A2- 102018 076 494
- US-A1- 2009 232 748
- US-B2- 8 268 338
- LIANG QINGHUA ET AL: "Surfactant-assisted synthesis of photocatalysts: Mechanism, synthesis, recent advances and environmental application", CHEMICAL ENGENEERING JOURNAL, vol. 372, 25 April 2019 (2019-04-25), pages 429 - 451, XP085695770, ISSN: 1385-8947, DOI: 10.1016/J.CEJ.2019.04.168
- MARCOS A BIZETO ET AL: "Niobium Oxide Mesophases Obtained by Self-Assembly of an Aqueous Soluble Niobium Complex Precursor and Organic Templates", EUROPEAN JOURNAL OF INORGANIC CHEMISTRY, WILEY-VCH VERLAG , WENHEIM, DE, vol. 2007, no. 4, 4 December 2006 (2006-12-04), pages 579 - 584, XP072116752, ISSN: 1434-1948, DOI: 10.1002/EJIC.200600529
- ANTONELLI D M ET AL: "LIGAND-ASSISTED LIQUID CRYSTAL TEMPLATING IN MESPOROUS NIOBIUM OXIDE MOLECULAR SIEVES", INORGANIC CHEMISTRY, AMERICAN CHEMICAL SOCIETY, EASTON , US, vol. 35, no. 11, 22 May 1996 (1996-05-22), pages 3126 - 3136, XP000577563, ISSN: 0020-1669, DOI: 10.1021/IC951533P
- CHAGAS POLIANE, HENRIQUE S. OLIVEIRA, RAQUEL MAMBRINI, MIREILLE LE HYARIC, MAURO V.DE ALMEIDA LUIZ C.A.OLIVEIRA: "A novel hydrofobic niobium oxyhydroxide as catalyst: Selective cyclohexene oxidation to epoxide", APPLIED CATALYSIS A: GENERAL, ELSEVIER, AMSTERDAM, NL, vol. 454, 15 March 2013 (2013-03-15), AMSTERDAM, NL , pages 88 - 92, XP055908395, ISSN: 0926-860X, DOI: https://doi.org/10.1016/j.apcata. 2013.01.00 7
- BAKER NANCY; WILLIAMS ANTONY J.; TROPSHA ALEXANDER; EKINS SEAN: "Repurposing Quaternary Ammonium Compounds as Potential Treatments for COVID-19", PHARMACEUTICAL RESEARCH, SPRINGER US, NEW YORK, vol. 37, no. 6, 25 May 2020 (2020-05-25), New York, XP037200666, ISSN: 0724-8741, DOI: 10.1007/s11095-020-02842-8
- LIMA MARIA, ALMEIDA RAMON, FONSECA FRANCINE, GONÇALVES CAROLINE: "http://static.sites.sbq.org.br/quimicanova.sbq.org.br/pdf/AG2020-0202.pdf", QUIMICA NOVA, SOCIEDADE BRASILEIRA DE QUIMICA, BR, vol. 43, 1 January 2020 (2020-01-01), BR , pages 668 - 678, XP055908403, ISSN: 0100-4042, DOI: 10.21577/0100-4042.20170552
- DEXTER FRANKLIN, PARRA MICHELLE C, BROWN JEREMIAH R, LOFTUS RANDY W: "Perioperative COVID-19 Defense: An Evidence-Based Approach for Optimization of Infection Control and Operating Room Management", ANESTHESIA AND ANALGESIA, vol. 131, no. 1, 30 June 2020 (2020-06-30), US , pages 37 - 42, XP009534783, ISSN: 0003-2999, DOI: 10.1213/ANE.0000000000004829

## Description

The present technology describes the process of obtaining a material containing nanostructured reactive molecules based on niobium compounds, the products obtained and their use as a chemical/biological barrier on surfaces. The nanostructured hybrid material can be used as a component of cosmetic products, intensifying its effectiveness and time of action. In addition, it can be incorporated into different surfaces, including fabrics, maintaining its action against bacteria and viruses. It can also be applied in the form of a gel or liquid spray. Niobium nanoparticles combined with quaternary ammonium compounds for sprays and with methylene blue dye to form sanitizing gels showed high efficiency in deactivating the coronavirus, with stability and prolonged activity.

Brazil holds more than 90% of the world's exploitable reserves of niobium and is still its largest producer and exporter. In this way, the development of new products for use in different industrial sectors can become a topic of strategic importance for the development, not only of the state of Minas Gerais, but also for the country. This development may mean a technological increase in the products generated from Brazilian ore, implying an increase in added value and the consequent generation of jobs in the country.

In the context of technology development, it is observed that niobium-based systems have played an important role in several reactions, being able to act as an active phase, dopant and also as a reactional support. Special characteristics, such as redox property, photosensitivity, high acidity and strong metal-support interaction have made these systems, especially oxyhydroxide, niobium oxide, phosphate and pentoxide, present high performance in the most varied types of reaction. In order to increase its activity, many studies report the modification of Nb₂O₅ with phosphoric acid, resulting in niobium phosphate. In some cases, NbCl₅ is also used as a precursor. The scientific literature also reports several studies highlighting the use of niobium compounds in oxidation reactions, including organic pollutants present in industrial effluents or in glycerol cleavage reactions.

Quaternary ammonium compounds, such as hexadecyltrimethylammonium bromide (CTAB), are membrane active agents, that is, the predominant sites of action are the cytoplasmic membrane in bacteria or the plasma membrane in yeast. Surface active agents or surfactants have two regions in their molecular structure: a hydrophobic (supporting) group and a hydrophilic (polar) group. Cationic agents, such as quaternary ammonium compounds, are the most useful antiseptics and disinfectants, and are also known as cationic surfactants. CTAB serves as an important surfactant in the DNA extraction buffer system to remove membrane lipids and promote cell lysis. CTAB has been shown to have potential use as an anticancer agent, promoting apoptosis of tumor cells from head and neck cancers (Emma Ito, Kenneth W. Yip, David Katz, Sonali B. Fonseca, David W. Hedley, Sue Chow, G. WeiXu, Tabitha E. Wood, Carlo Bastianutto, Aaron D. Schimmer, Shana O. Kelley, Fei-Fei Liu. Potential Use of Cetrimonium Bromide as an Apoptosis-Promoting Anticancer Agent for Head and Neck Cancer. Molecular Pharmacology, 76, 2009, 969-983).

Quaternary ammonium salts have known antibacterial properties and their hydrophobic carbon chain can deactivate viruses by reacting with their lipid barrier, with activity already demonstrated in the deactivation of the coronavirus (Franklin Dexter, FASA, Michelle C. Parra, Jeremiah R. Brown, Randy W. Loftus. Perioperative COVID-19 Defense: An Evidence-Based Approach for Optimization of Infection Control and Operating Room Management, Anesthesia & Analgesia, 2020) (Nancy Baker, Antony J. Williams, Alexander Tropsha, Sean Ekins. Repurposing Quaternary Ammonium Compounds as Potential Treatments for COVID-19, Pharm Res, 37, 2020, 104) (Maria L. S. O. Lima, Ramon K. S. Almeida, Francine S. A. da Fonseca, Caroline C. S Gonçalves. A química dos saneantes em tempos de COVID-19. Você sabe como funciona? Quim. Nova, 43, 2020, 668-678).

Patent document US8.337.872, entitled "Method *of inhibiting the transmission of* influenza *virus",* from 2006, relates to the method of inhibiting the transmission of the influenza virus. Antimicrobial compositions with rapid and persistent antiviral efficacy against influenza viruses, including avian influenza viruses, are disclosed. Antimicrobial compositions contain a disinfectant alcohol, an organic acid and water, wherein the composition has a pH of about 5 or less and the non-volatile components of the composition are capable of forming a barrier film or layer on a treated surface.

Patent US 9,549,949, from 2008, entitled *"Antiviral agent"* describes an antiviral agent that contains as an active ingredient a particle of at least one type of iodide composed of iodine and an element shown in Period 4 to Period 6 and Group 8 to Group 15 of the periodic table or at least one type of monovalent copper compound. The antiviral agent can be incorporated into a variety of products. Although niobium is in group 5 of the periodic table, this document presents iodide or iodine compounds in its composition, not referring to quaternary ammonium salts. US 8 268 338 describes an antimicrobial metal cation surrounded by a reverse micelle of anionic surfactants for antimicrobial applications.

The present technology describes a product with a combined action between niobium compounds and quaternary ammonium salts to act as a chemical/biological barrier on surfaces. The material can be used in products in the form of a liquid to protect surfaces, being efficient in deactivating the coronavirus in an intensified way. The mechanism of action of the nanostructured hybrid material proposed in the present technology consists of chemically combining a niobium compound with a high negative charge that accumulates around it several groups of quaternary ammonium salts, promoting an intensification of its action in the deactivation, for example, of the coronavirus. This is because the compound formed by the chemical bond established between niobium and the quaternary ammonium salt concentrates the hydrophobic groups responsible for deactivating the virus, creating a protective layer on the surface on which it was deposited. The synergistic effect between the niobium compound and the CTAB obtained in the present technology was evident with the results of the coronavirus deactivation studies, where the species separately were much less efficient than the nanostructured hybrid material containing Nb-CTAB.

The present technology also describes the product formed by the combination between the nanostructured hybrid material based on niobium and the methylene blue dye, in the form of a gel, obtained by incorporation in alcohol in commercial gel, which showed an excellent performance in reducing the viral charge. The antiviral effect of the product occurs due to the semiconductor property of the niobium compound, which has the ability to act via photocatalytic effect. This makes it possible to use only 0.5% of the Nb-CTAB gel in combination with commercial alcohol gel to act very efficiently in the deactivation of the coronavirus. The reduction in viral load observed was much greater when compared to pure alcohol gel. In addition, the new molecule Nb-methylene blue remains active, even after evaporation of commercial alcohol, providing prolonged action to the proposed product.

The products of this technology have the potential to be used as chemical/biological barriers due to their incorporation into different surfaces. The hybrid material containing the combination of an inorganic material (niobium) and an organic material (CTAB and/or dye) with structural dimensions of nanostructures can be used as a component of cosmetic products, intensifying their effectiveness and time of action. In addition, it can be incorporated into different fabric surfaces, maintaining its action against bacteria and viruses. In addition, it can be incorporated into different fabric surfaces, maintaining its action against bacteria and viruses. It can also be applied in the form of a gel or liquid spray, presenting a synergistic effect with other sanitizing products, such as alcohol and disinfectants, among others.

### BRIEF DESCRIPTION OF THE DRAWINGS

**Figure 1** shows a photograph with the products in gel **(A)** and liquid **(B)** form from niobium oxide.
**Figure 2** shows the CTAB NMR spectra, of the new Nb-CTAB molecule **(A)** and of the model created for the protection generated with the application on surfaces **(B).**
**Figure 3** shows the feasibility study of *Enterococcusfaecalis* (Ef), *Escherichia coli* (Ec) and *Eikenellacorrodens* (Ek) bacteria using niobium compounds (A=niobium spray/CTAB; B=niobium spray/CTAB/methylene blue; C =niobium gel/methylene blue).
**Figure 4** shows the viral load reduction studies for the different samples and their respective controls. In **(A),** the control samples for the spray are represented by s1-s12 and s13 and the control samples for the gel are represented by g1 and g2, g4-g6. **(B)** and **(C)** show the study of the prolonged viral load reduction effect of liquid and gel materials (S12=niobium spray/CTAB; g3=niobium spray/CTAB/methylene blue; g7=niobium gel/methylene blue). The red arrow indicates the result for the g7 sample, which inactivated all the viruses.

### DETAILED DESCRIPTION OF THE TECHNOLOGY

The present technology describes the process of obtaining a material containing nanostructured reactive molecules based on niobium compounds, the products obtained and their use as a chemical/biological barrier on surfaces. The nanostructured hybrid material can be used as a component of cosmetic products, intensifying its effectiveness and time of action. In addition, it can be incorporated into different surfaces, including fabrics, maintaining its action against bacteria and viruses. It can also be applied in the form of a gel or liquid spray. Niobium nanoparticles combined with quaternary ammonium compounds for sprays and with methylene blue dye to form sanitizing gels showed high efficiency in deactivating the coronavirus, with stability and prolonged activity.

The niobium oligomer-based nanostructured hybrid material contains negatively charged niobium oligomers and organic cations selected from the group comprising quaternary ammonium salts of the didecyldimethylammonium chloride type, hexadecyltrimethylammonium bromide (CTAB), methylene blue, gentian violet and/or fuchsine dye, at concentrations of 10 to 2000 mg/L of quaternary ammonium for concentrations between 100 and 3000 mg/L of niobium.

Negatively charged niobium oligomers are to be understood in the present specification as selected from a list consisting of niobium oxides, niobium pentoxide, niobic acid and niobium phosphate.

The nanostructured hybrid material based on niobium oligomers can be incorporated into alcohol gel between 10 and 70% m/m, in proportions of 0.1 to 10% by mass of the niobium compound.

The process for obtaining the nanostructured hybrid material based on niobium oligomers comprises the following steps:
a. Dissolving the niobium compounds, containing between 1 and 5 g/L of niobium, in oxalic acid or hydrogen peroxide, in concentrations between 10 and 50% m/m;
b. Adding 10 to 1000 mg/L of quaternary ammonium salt and/or 500 to 20,000 mg/L of cationic dye to the niobium oligomer obtained in step "a";
c. Stirring the solution obtained in step "b" between 10 and 100 rpm, for a period of time between 5 and 30 min, at room temperature.

The niobium compounds described in step "a" are selected from the group comprising their oxides, being niobium oxides, niobium pentoxide, niobic acid and niobium phosphate.

The quaternary ammonium, described in step "b", is selected from the group comprising didecyldimethylammonium chloride or hexadecyltrimethylammonium bromide (CTAB) and the cationic dye is selected from the group comprising methylene blue, gentian violet or fuchsine dye, which may be added 0.1 to 5% m/m of alcohol gel 10 to 70% m/m after step "c".

The nanostructured hybrid material based on niobium oligomer can be used in the production of sanitizing compounds, with bactericidal and antiviral activities, preferably against coronaviruses.

The following examples describe aspects of the present technology and should not be considered as limiting.

### EXAMPLE 1 - Obtaining and using a nanostructured hybrid material based on niobium oligomer for the deactivation of the coronavirus.

The compounds in spray form are obtained by the reaction of the niobium oligomer containing 2,000 mg/L of niobium with the quaternary ammonium (CTAB) 100 mg/L. CTAB is dripped into the oligomer solution until the formation of a micelle containing niobium and CTAB chemically bonded to form Nb-CTAB. It is important to point out that the micellar point is obtained before the solution gelling, so that agitation must be observed and the medium gelling should be avoided. The resulting micelle should be kept under gentle agitation at 100 rpm for 10 min.

The sanitizing gel was obtained from the reaction of the methylene blue dye and the niobium compound using equal volumes of the compounds, the dye concentration being 1000 mg/L and the niobium compound concentration of 2,000 mg/L. This material has good sanitizing properties, especially when associated with alcohol gel 70% m/m. In the mixture with alcohol gel 70% m/m, a ratio of 0.5% by mass of the sanitizing gel formed by Nb-methylene blue was prepared.

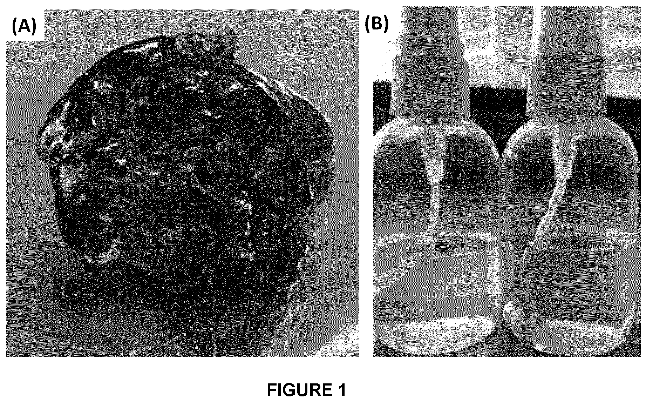

**Figure 1** shows a photograph of the final gel obtained containing 0.5% methylene blue dye in 70% alcohol gel and sprays containing 10 mg/L of CTAB quaternary ammonium in aqueous niobium compound.

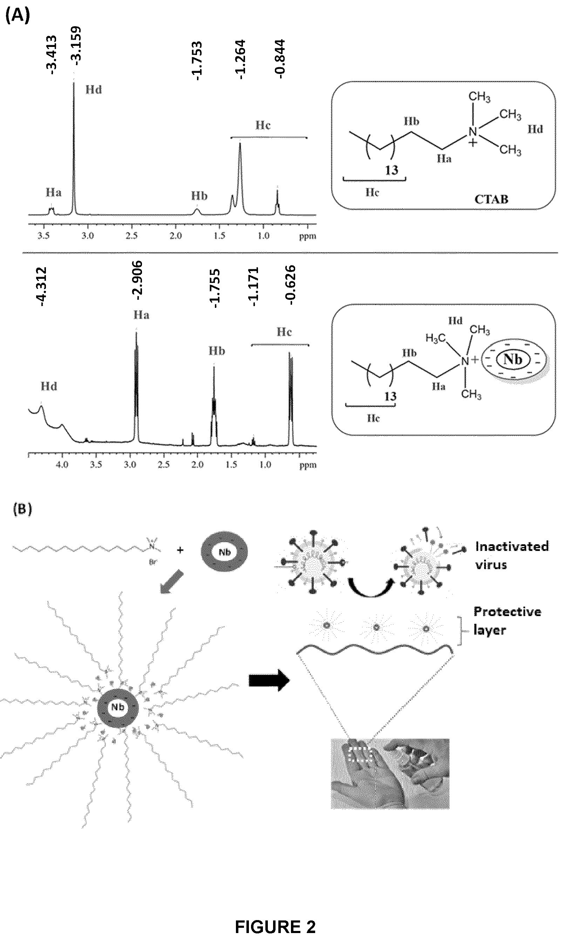

Strong evidence of the chemical interaction established between the negatively charged species of niobium and CTAB was obtained by RAMAN spectroscopy, where the shifts referring to the established chemical interactions are clearly observed, as shown in **Figure 2a****.** A model of the newly formed structure and its effect on the skin surface as a protective layer is presented in **Figure 2b****.** Thus, based on the analysis of the ¹H NMR spectra for the surfactant CTAB and the mixture containing the niobium compound and CTAB, both in D₂O, it can be inferred that there is an interaction between the species, and this synergism potentiates the activity of sample against the virus that causes COVID-19. The niobium compound has a high negative surface charge, which, when interacting with the positive part of the surfactant, transfers electron density, making the hydrogens of the molecule more shielded, causing a significant difference between the chemical shifts of the H. The hydrogens of the methyl groups of CTAB present a chemical shift (δ) of 3.16 ppm, however, when interacting with Nb, it is observed a shift to δ = 4.31 ppm, which due to the strong influence of the metal, presents itself as an extended singlet and practically superimposed on the water signal. Ha, the carbon hydrogen directly bonded to the N atom of CTAB, has a δ = 3.41 ppm; however, in the presence of Nb, the triplet corresponding to this H undergoes a shift to δ = 2.91 ppm. The chemical shifts of the compounds clearly indicate the formation of a new chemical species established between Nb-CTAB.

### EXAMPLE 2 - Bacteria deactivation study

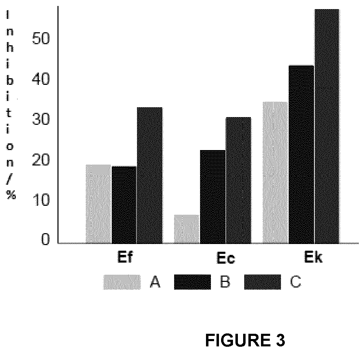

The products were tested in the feasibility study of *Enterococcusfaecalis* (Ef), *Escherichia coli* (Ec) and *Eikenellacorrodens* (Ek) bacteria. For the studies, 100 µL of BHI culture medium and 100 µL of sterile distilled water were added to each well of the culture medium sterility control plate. The microplates are incubated in an oven at 37 °C and after 24 h the first test reading is performed in a microplate reader. After 48 h, a new reading should be performed, ending the test. Readings are taken at a fixed wavelength of 492 nm. The studies in **Figure 3** showed the ability of the materials to promote the deactivation of three types of bacteria. In the studies carried out, 1.0 x 0.5 cm silver plates were sequentially polished on 1500, 2000 and 2500 mesh SiC sandpaper and with commercial polishing paste before the cleaning baths. This procedure is optional and not recommended for objects that have details, such as texts and images, on their surfaces.

### EXAMPLE 3 - Study of viral load reduction

For viral load reduction studies directly employing the coronavirus, eight parts of the compound were adapted to room temperature (RT) and mixed with one part of the virus suspension. Immediately after incubation for defined periods at room temperature, the mixture was diluted 1:10. After four days of incubation at 37 °C in a CO₂ incubator, cells were microscopically examined for virus-specific cytopathogenic effects after 10 min of virus contact with the niobium compound. All tests were performed in triplicate.

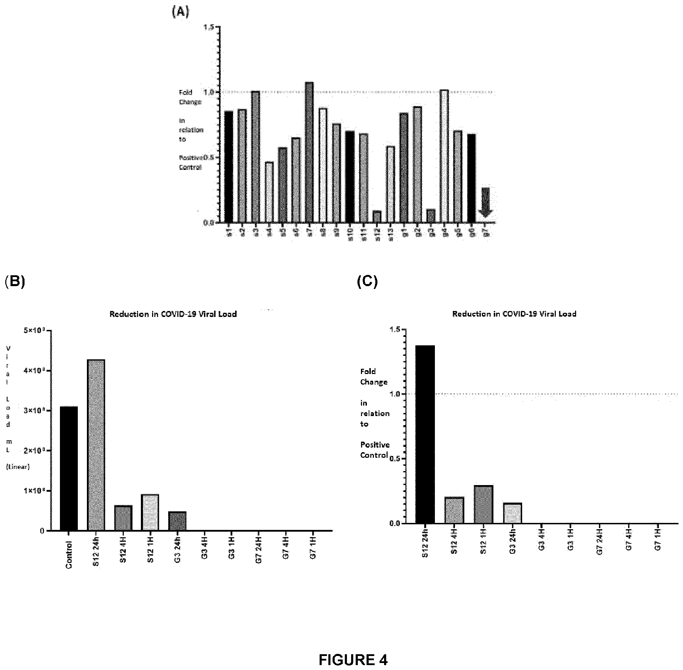

Initially, exploratory studies were carried out with different proportions of the compounds and with the materials separately. **Figure 4(A)** presents these data and clearly shows the potentiated effect of the new molecule formed by the reaction between the niobium compound and CTAB. In fact, the results of samples S10 (representing a solution containing pure CTAB dissolved in water) and S12 (sample containing the same content of CTAB reacted with niobium), clearly indicate the potentiated effect of the Nb-CTAB species.

Only CTAB promoted a viral load reduction of approximately 30%, while the new molecule Nb-CTAB promoted a 90% reduction in viral load. This result clearly shows the potentiation of the action of the new hybrid molecule formed by the reaction between CTAB and the negatively charged species of niobium, according to the model generated in the present technology.

Another result that deserves to be highlighted is the data referring to the combination of niobium gel containing niobium-methylene blue with alcohol gel. The presence of niobium gel promoted a viral load reduction of 100%, according to the results of the g7 sample in **Figure 4(A)****.** In turn, alcohol gel (sample g1) without the presence of the Nb-methylene blue compound showed a viral load reduction of only 15%.

**Figure 4** also presents two ways of presenting the assessment of viral load reduction using the niobium hybrid products developed in the present technology. **Graph B** indicates that, for values below 1, viral load reduction was observed in the presence of niobium compounds. **Graph C** shows the same result, but in a quantitative linear form. The results also show that the products have a prolonged effect because the materials were deposited on a glass surface and the virus deposited after 1, 4 and 24 hours. After this period on the surface, the virus was deposited and after 10 min the viral load was analyzed. The material marked as g7 in the graphs showed 100% removal of the virus at all times studied, indicating its efficiency and, in addition, its ability to remain active after 24 h after its application on the surface. The material marked g7 is niobium gel containing methylene blue chemically bonded to the niobium oligomer. As seen in **Figure 4(A)****,** pure alcohol did not show high efficiency under the conditions of the experiments; however, the niobium compound continues to act in the deactivation of the coronavirus for a longer time and with more efficiency compared to pure commercial alcohol gel. The data show that in compounds containing niobium, only 0.5% of it dispersed in commercial alcohol gel promotes 100% reduction in viral load after 24 h of deposition on surfaces. These results indicate the efficiency of the new species formed between the niobium compound and the methylene blue dye, forming in an unprecedented way a semiconductor gel capable of photocatalytically acting in the deactivation of the coronavirus, allowing the formation of a material with the ability to act in a prolonged way on the different surfaces. It should be clear that pure alcohol loses its activity with natural evaporation, but that the niobium species remains active, making this new compound unique in the fight against coronavirus.

Materials g3 and S12, which are sprays containing the hybrid niobium compounds in liquid form, also showed the ability to deactivate the coronavirus, although less efficient when compared to material g7. These compounds in liquid form also showed efficiency with prolonged time, being active even after 6h of deposition on surfaces.

The results obtained indicate that the materials described in the present invention have high potential to be used in the fight against coronavirus and can be used in the form of a spray as a sanitizer and in the form of gel and can be used as a component of an alcohol gel.

## Claims

1. **NANOSTRUCTURED HYBRID MATERIAL BASED ON NIOBIUM OLIGOMERS, characterized in that it comprises:**
negatively charged niobium compound that is selected from the group consisting of niobium oxides, niobium pentoxide, niobic acid and niobium phosphate and quaternary ammonium salts that are selected from the group consisting of the didecyldimethylammonium chloride and hexadecyltrimethylammonium bromide (CTAB), wherein the quaternary ammonium salts are accumulated around the nobium compound, and
a cationic dye that is selected from the group consisting of dye methylene blue, gentian violet and fuchsine, wherein said quaternary ammonium salts are at concentration of 10 to 2000 mg/L, and niobium compound is at a concentration between 100 and 3000 mg/L.

2. **NANOSTRUCTURED HYBRID MATERIAL BASED ON NIOBIUM OLIGOMERS, according to claim 1, characterized in that** it is incorporated into alcohol gel between 10 and 70% m/m, in proportions of 0.1 to 10% by mass of the niobium compound.

3. **METHOD OF OBTAINING THE NANOSTRUCTURED HYBRID MATERIAL BASED ON NIOBIUM OLIGOMERS defined in claim 1, characterized by comprising** the following steps:
**a)** Dissolving niobium compounds containing between 1 and 5 g/L of niobium, in oxalic acid or hydrogen peroxide, to a concentration between 10 and 50% m/m;
**b)** Adding 10 to 1000 mg/L of quaternary ammonium salt and/or 500 to 20,000 mg/L of cationic dye to the niobium oligomer obtained in step "a";
**c)** Stirring the solution obtained in step "b" between 10 and 100 rpm, for a period of time between 5 and 30 min, at room temperature.

4. **METHOD OF OBTAINING A NANOSTRUCTURED HYBRID MATERIAL BASED ON NIOBIUM OLIGOMER, according to claim 3, step "a", characterized in that** the niobium compounds are selected from the group consisting of niobium oxides, niobium pentoxide, niobic acid and niobium phosphate.

5. **METHOD OF OBTAINING A NANOSTRUCTURED HYBRID MATERIAL BASED ON NIOBIUM OLIGOMERS, according to claim 3, step "b", characterized in that** the quaternary ammonium salt is didecyldimethylammonium chloride or hexadecyltrimethylammonium bromide (CTAB).

6. **METHOD OF OBTAINING A NANOSTRUCTURED HYBRID MATERIAL BASED ON NIOBIUM OLIGOMERS, according to claim 3, step "b", characterized in that** the cationic dye is selected from the group consisting of dye methylene blue, gentian violet or fuchsine.

7. **METHOD OF OBTAINING A NANOSTRUCTURED HYBRID MATERIAL BASED ON NIOBIUM OLIGOMERS, according to claim 3, characterized in that** 0.1 to 5% m/m of alcohol gel 10 to 70% m/m is added after step "c".

8. NON-THERAPEUTIC **USE OF NANOSTRUCTURED HYBRID MATERIAL BASED ON NIOBIUM OLIGOMERS, defined in any one of claims 1 to 2,** for sanitizing compounds, with bactericidal and antiviral activities, preferably against coronaviruses.

## Patentansprüche

1. NANOSTRUKTURIERTES HYBRIDMATERIAL AUF BASIS VON NIOBOLIGOMEREN, **dadurch gekennzeichnet, dass** es Folgendes umfasst:
eine negativ geladene Niobverbindung, die aus der Gruppe ausgewählt ist, bestehend aus Nioboxiden, Niobpentoxid, Niobsäure und Niobphosphat, und quaternäre Ammoniumsalze, die aus der Gruppe ausgewählt sind, bestehend aus Didecyldimethylammoniumchlorid und Hexadecyltrimethylammoniumbromid (CTAB), wobei sich die quaternären Ammoniumsalze um die Niobverbindung herum ansammeln, und
einen kationischen Farbstoff, der aus der Gruppe ausgewählt ist, bestehend aus Methylenblau, Gentianaviolett und Fuchsin, wobei die quaternären Ammoniumsalze in einer Konzentration von 10 bis 2000 mg/l vorliegen und die Niobverbindung in einer Konzentration zwischen 100 und 3000 mg/l vorliegt.

2. NANOSTRUKTURIERTES HYBRIDMATERIAL AUF BASIS VON NIOBOLIGOMEREN nach Anspruch 1, **dadurch gekennzeichnet, dass** es zwischen 10 und 70 % m/m in ein Alkoholgel eingebunden ist, in Anteilen von 0,1 bis 10 Massen-% der Niobverbindung.

3. VERFAHREN ZUM HERSTELLEN DES NANOSTRUKTURIERTEN HYBRIDMATERIALS AUF BASIS VON NIOBOLIGOMEREN NACH ANSPRUCH 1, **dadurch gekennzeichnet, dass** es die folgenden Schritte umfasst:
a) Auflösen von Niobverbindungen, die zwischen 1 und 5 g/l Niob enthalten, in Oxalsäure oder Wasserstoffperoxid auf eine Konzentration zwischen 10 und 50 % m/m;
b) Hinzufügen von 10 bis 1000 mg/l quaternärem Ammoniumsalz und/oder 500 bis 20.000 mg/l kationischem Farbstoff zu dem in Schritt "a" erhaltenen Nioboligomer;
c) Rühren der in Schritt "b" erhaltenen Lösung bei zwischen 10 und 100 U/min über einen Zeitraum von zwischen 5 und 30 Minuten bei Raumtemperatur.

4. VERFAHREN ZUM HERSTELLEN EINES NANOSTRUKTURIERTEN HYBRIDMATERIALS AUF BASIS VON NIOBOLIGOMEREN nach Anspruch 3, Schritt "a", **dadurch gekennzeichnet, dass** die Niobverbindungen aus der Gruppe ausgewählt sind, die aus Nioboxiden, Niobpentoxid, Niobsäure und Niobphosphat besteht.

5. VERFAHREN ZUM HERSTELLEN EINES NANOSTRUKTURIERTEN HYBRIDMATERIALS AUF BASIS VON NIOBOLIGOMEREN nach Anspruch 3, Schritt "b", **dadurch gekennzeichnet, dass** das quaternäre Ammoniumsalz Didecyldimethylammoniumchlorid oder Hexadecyltrimethylammoniumbromid (CTAB) ist.

6. VERFAHREN ZUM HERSTELLEN EINES NANOSTRUKTURIERTEN HYBRIDMATERIALS AUF BASIS VON NIOBOLIGOMEREN nach Anspruch 3, Schritt "b", **dadurch gekennzeichnet, dass** der kationische Farbstoff aus der Gruppe ausgewählt ist, bestehend aus Methylenblau, Gentianaviolett oder Fuchsin.

7. VERFAHREN ZUM HERSTELLEN EINES NANOSTRUKTURIERTEN HYBRIDMATERIALS AUF BASIS VON NIOBOLIGOMEREN nach Anspruch 3, **dadurch gekennzeichnet, dass** nach Schritt "c" 0,1 bis 5 % m/m eines Alkoholgels mit 10 bis 70 % m/m hinzugefügt werden.

8. NICHT-THERAPEUTISCHE VERWENDUNG EINES NANOSTRUKTURIERTEN HYBRIDMATERIALS AUF BASIS VON NIOBOLIGOMEREN nach einem der Ansprüche 1 bis 2, für desinfizierende Verbindungen mit bakterizider und antiviraler Wirkung, vorzugsweise gegen Coronaviren.

## Revendications

1. MATÉRIAU HYBRIDE NANOSTRUCTURÉ À BASE D'OLIGOMÈRES DE NIOBIUM, **caractérisé en ce qu'**il comprend :
un composé de niobium chargé négativement, sélectionné dans le groupe constitué des oxydes de niobium, du pentoxyde de niobium, de l'acide niobique et du phosphate de niobium, et des sels d'ammonium quaternaire sélectionnés dans le groupe constitué du chlorure de didécyldiméthylammonium et du bromure d'hexadécyltriméthylammonium (CTAB), les sels d'ammonium quaternaire s'accumulant autour du composé de niobium, et
un colorant cationique sélectionné dans le groupe constitué du bleu de méthylène, du violet de gentiane et de la fuchsine, lesdits sels d'ammonium quaternaire étant à une concentration de 10 à 2 000 mg/L et le composé de niobium étant à une concentration comprise entre 100 et 3 000 mg/L.

2. MATÉRIAU HYBRIDE NANOSTRUCTURÉ À BASE D'OLIGOMÈRES DE NIOBIUM selon la revendication 1, **caractérisé en ce qu'**il est incorporé dans un gel alcoolique titrant de 10 à 70 % m/m, à raison de 0,1 à 10 % en masse du composé de niobium.

3. PROCÉDÉ D'OBTENTION DU MATÉRIAU HYBRIDE NANOSTRUCTURÉ À BASE D'OLIGOMÈRES DE NIOBIUM défini dans la revendication 1, **caractérisé en ce qu'**il comprend les étapes suivantes :
a) dissoudre des composés de niobium contenant de 1 à 5 g/L de niobium dans de l'acide oxalique ou du peroxyde d'hydrogène, jusqu'à une concentration comprise entre 10 et 50 % m/m ;
b) ajouter de 10 à 1 000 mg/L de sel d'ammonium quaternaire et/ou de 500 à 20 000 mg/L de colorant cationique à l'oligomère de niobium obtenu à l'étape « a » ;
c) agiter la solution obtenue à l'étape « b » à une vitesse comprise entre 10 et 100 tr/min, pendant une durée comprise entre 5 et 30 min, à température ambiante.

4. PROCÉDÉ D'OBTENTION D'UN MATÉRIAU HYBRIDE NANOSTRUCTURÉ À BASE D'OLIGOMÈRE DE NIOBIUM selon la revendication 3, à l'étape « a », **caractérisé en ce que** les composés de niobium sont sélectionnés dans le groupe constitué des oxydes de niobium, du pentoxyde de niobium, de l'acide niobique et du phosphate de niobium.

5. PROCÉDÉ D'OBTENTION D'UN MATÉRIAU HYBRIDE NANOSTRUCTURÉ À BASE D'OLIGOMÈRES DE NIOBIUM selon la revendication 3, à l'étape « b », **caractérisé en ce que** le sel d'ammonium quaternaire est le chlorure de didécyldiméthylammonium ou le bromure d'hexadécyltriméthylammonium (CTAB).

6. PROCÉDÉ D'OBTENTION D'UN MATÉRIAU HYBRIDE NANOSTRUCTURÉ À BASE D'OLIGOMÈRES DE NIOBIUM selon la revendication 3, à l'étape « b », **caractérisé en ce que** le colorant cationique est sélectionné dans le groupe constitué du bleu de méthylène, du violet de gentiane et de la fuchsine.

7. PROCÉDÉ D'OBTENTION D'UN MATÉRIAU HYBRIDE NANOSTRUCTURÉ À BASE D'OLIGOMÈRES DE NIOBIUM selon la revendication 3, **caractérisé en ce que** de 0,1 à 5 % m/m d'un gel alcoolique titrant de 10 à 70 % m/m est ajouté après l'étape « c ».

8. UTILISATION NON THÉRAPEUTIQUE D'UN MATÉRIAU HYBRIDE NANOSTRUCTURÉ À BASE D'OLIGOMÈRES DE NIOBIUM, défini dans l'une quelconque des revendications 1 à 2, dans des compositions désinfectantes présentant des activités bactéricides et antivirales, de préférence contre les coronavirus.
